# EUROPEAN PATENT APPLICATION

(11) **EP 4 733 496 A1**
(43) Date of publication of application: **29.04.2026**
(21) Application number: 24461630.6
(22) Date of filing: 24.10.2024
(51) Int. Cl.: E03F 7/02, E03F 7/04, F16K 3/02, E03F 5/10

(54) **PASSIVE RETURN MECHANISM OF CHANNEL VALVE GATE, CHANNEL VALVE EQUIPPED WITH A PASSIVE RETURN MECHANISM**

(71) Applicant: Biospekt Sp. z o.o., 30-387 Krakow (PL)
(72) Inventor: Zygmunt, Piotr, 30-383 Krakow (PL); Politowicz, Marcin, 32-050 Skawina (PL); Fijol, Marcin, 32-540 Pila Koscielecka (PL)
(74) Representative: Czarnik, Maciej

(57) **Abstract**

A passive return mechanism for a gate (3) of a channel valve (Z) equipped with an actuator (1) powered by an external energy source, wherein the actuator (1) maintains the gate (3) of the channel valve in a specified working position: open/closed, characterized in that the passive return mechanism comprises a mechanical energy accumulator (2) configured such that, in the event of a power failure in the actuator (1) maintaining the gate (3) of the channel valve in the specified open/closed position, the mechanical energy accumulator (2) activates the actuator (1), which moves the gate (3) of the channel valve back to the appropriate position opposite to the working position, i.e., closed from open and open from closed.

## Description

The invention concerns a passive return mechanism for a channel valve gate based on mechanical energy accumulators, enabling the automatic return of the channel valve gate to its neutral (normal) position. The mechanism finds application in sanitary, stormwater, and combined sewer systems. In another aspect, the invention also relates to a channel valve and a sewer equipped with such a valve.

A channel valve is a regulatory device that allows for the periodic closure of the sewer channel, thus halting the liquid flow. Channel valves are used in sewer systems, wastewater treatment plants, sewer manholes, and other locations where flow control is necessary. Channel valves are primarily used in stormwater or combined sewer systems and can be installed in gravity sewers within chambers or manholes or at outflows into watercourses. Channel valves are applied wherever there is a risk of backflow of stormwater into the sewer network or where it is technologically necessary to cut off liquid inflow.

In terms of their operation within the sewer system, two primary types of channel valves are known in the prior art: normally-open (NO) and normally-closed (NC). In their neutral position, NO valves remain open, allowing free flow through the sewer system, while closure is enforced when flow needs to be temporarily stopped. Less commonly used NC valves are closed in the neutral state, and their opening is enforced only when the sewer system requires flow to be enabled. In the event of a failure of the mechanism operating the valve, it remains in its active position (i.e., closed for NO devices or open for NC devices), causing sewer system disruptions. The consequence may be overflows and/or improper wastewater flow within the sewer system, leading to adverse environmental and economic effects.

In urban areas equipped with underground sewer systems for sanitary, stormwater, or combined sewage leading to treatment plants or other outlets, heavy rainfall often necessitates retention of excess sewage in underground or surface retention tanks/basins to protect the receiving water-bodies from excessive inflow or low-lying areas from flooding. Additionally, it is often necessary to limit emergency discharge of stormwater into watercourses within limits imposed by applicable laws. In highly urbanized areas, particularly in the centers of large cities, building additional retention systems is often impossible due to the high density of underground technical infrastructure or formal-legal constraints.

In such cases, active flow control systems in sewer systems are used, which, by efficiently utilizing so-called channel retention - free capacity in collectors, manholes, and chambers above the free surface of the wastewater - eliminate the need for additional retention tanks and reduce the occurrence of sewer overflows.

The use of active flow control systems involves actuators that enable the movement of the channel valve gate. Prior art solutions include power and control systems for operating channel valves and similar devices. For example, US Patent US4268007 discloses a system of valves for actuating and controlling the operation of gates, slides, and dampers, based on a pneumatic-hydraulic actuator powered by pneumatic and hydraulic systems and controlled by a pneumatic divider. In the event of a power failure, gates, slides, and dampers remain in their last set position.

Another prior art example is Polish Patent PL233517 B1, which concerns a sewer regulation chamber and discloses its construction and equipment for use in decentralized, underground sanitary or stormwater sewer systems. The described sewer regulation chamber features a scissor valve on the collector inlet, whose position is controlled by a pneumatic actuator connected to a compressed air accumulator. Again, in this case, a power failure, e.g., due to depletion of the compressed air accumulator, results in the scissor valve remaining in its last set position.

The solution to this problem is the application of a device independent of the main actuator that enables the return of the valve gate to its neutral position. This device may be an additional gate drive, which, however, requires an independent energy source.

The objective of the invention is to ensure the return of sewer system actuators, preferably channel valves, to a defined neutral position without the need for additional energy supply. Unexpectedly, this objective has been achieved with the present invention.

This objective has been realized in a return mechanism for a channel valve gate, based on mechanical energy accumulators, enabling the automatic return of the channel valve to its neutral (normal) position, applicable in decentralized sanitary, stormwater, and combined sewer systems. Preferably, the channel valve is a pneumatic valve. Advantageously, the mechanical energy accumulator is a mechanical spring, gas spring, or counterweight, most preferably a gas spring.

The return mechanism according to the invention includes a device that stores mechanical energy during the activation of the valve and is used to move the channel valve gate to its neutral position. This solution is based on utilizing energy from the main actuator of the valve during its operation and does not require any additional energy source to perform its function. The return mechanism of the invention can be used to return the valve to its neutral position both during normal operation and in situations of main actuator failure (e.g., pneumatic). Furthermore, the use of the return mechanism significantly simplifies the construction of the valve, as it does not require actuators operating in both directions or additional emergency drives, and it is much safer to use in sewer systems.

The operation of the invention is as follows: in the normal, i.e., inactive state, the channel valve gate is in its neutral position, depending on the type of valve. For a normally-closed (NC) valve, the neutral position means the channel is closed, preventing the flow of liquid. In the case of a normally-open (NO) valve, the gate remains in the open position, allowing free flow of liquid, e.g., sewage or stormwater. The return mechanism, based on the mechanical energy accumulator, is at rest, and mechanical energy is not yet stored. The valve gate is stabilized in this position until a signal activates the actuator.

Upon actuator activation, e.g., pneumatic or hydraulic, the valve gate is moved from the neutral position to the active position. For a normally-closed (NC) valve, this means opening the channel, while for a normally-open (NO) valve, it means closing the liquid flow. During this movement, the mechanical energy accumulator, preferably a gas spring, mechanical spring, or counterweight, stores energy as the actuator acts on the valve gate. Energy accumulation occurs throughout the gate's movement cycle, preparing the return mechanism for emergency scenarios. After actuator operation, the valve remains in the active position until the next control signal or system conditions change.

In the event of actuator failure, e.g., due to damage or power loss, the valve gate is released from the drive and enters a free-moving state. The return mechanism, based on previously stored mechanical energy in the gas spring or another energy accumulator, automatically restores the gate to its neutral (normal) position. For a normally-closed (NC) valve, this means closing the channel, while for a normally-open (NO) valve, it means opening the liquid flow. This process occurs without requiring additional external energy, ensuring continuity of sewer system operation and eliminating the risk of uncontrolled flows or channel blockage in emergency situations.

An essential aspect of the invention is the passive return mechanism for the channel valve gate, equipped with an actuator powered by an external energy source, which maintains the channel valve gate in a specified operating position (open/closed). The passive return mechanism is characterized by including a mechanical energy accumulator configured so that, in the event of a power outage in the actuator, the mechanical energy accumulator activates the actuator to move the valve gate back to the opposite position relative to its operating position-closed from open and open from closed.

Preferably, the actuator in the passive return mechanism of the channel valve gate is a cylinder or a gearbox.

Preferably, the actuator in the passive return mechanism of the channel valve gate is a linear pneumatic actuator.

Preferably, the mechanical energy accumulator in the passive return mechanism of the channel valve gate is a spring or counterweight. Most preferably, the spring is a gas spring.

In another aspect, the invention pertains to a channel valve comprising a gate as a blocking element, an actuator connected to an external energy source maintaining the channel valve gate in a specified operating position (open/closed), and a frame, characterized by the channel valve being equipped with the passive return mechanism for the valve gate according to the invention.

The invention also encompasses a sewer equipped with a channel valve according to the invention and the application of such a channel valve.

The invention is shown in figures illustrating examples of applications, where:
Fig. 1 depicts an embodiment of a normally-closed channel valve in a rectangular projection (front view): Fig. 1A shows the valve in the inactive position, while Fig. 1B shows the valve in the active position.
Fig. 2 depicts an embodiment of a normally-open channel valve in a rectangular projection (front view): Fig. 2A shows the valve in the inactive position, while Fig. 2B shows the valve in the active position.

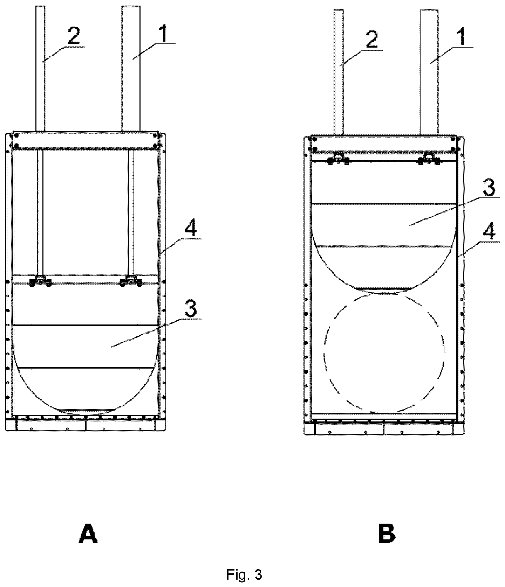

Fig. 3 depicts another embodiment of a normally-closed channel valve in a rectangular projection (front view): Fig. 3A shows the valve in the inactive position, while Fig. 3B shows the valve in the active position.

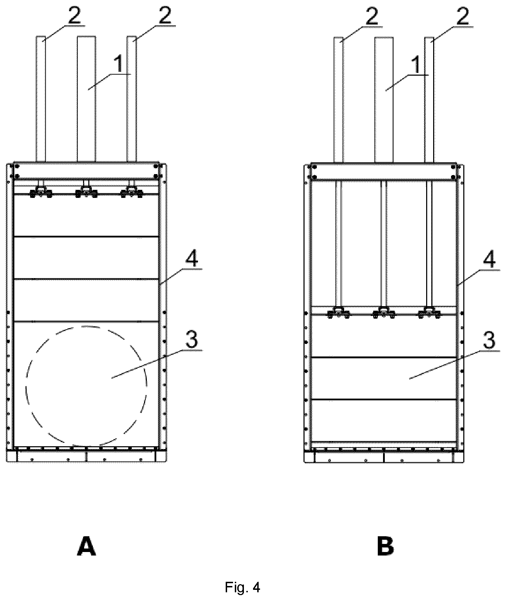

Fig. 4 depicts another embodiment of a normally-open channel valve in a rectangular projection (front view): Fig. 4A shows the valve in the inactive position, while Fig. 4B shows the valve in the active position.

### Example 1: Channel valve with a Linear Pneumatic Actuator and Gas Spring

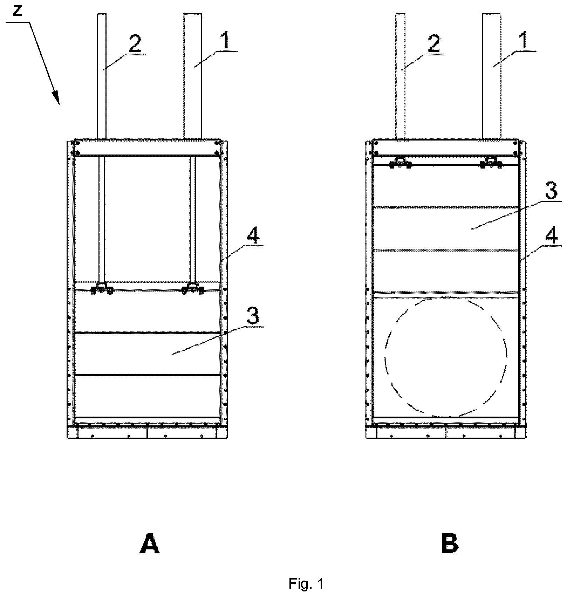

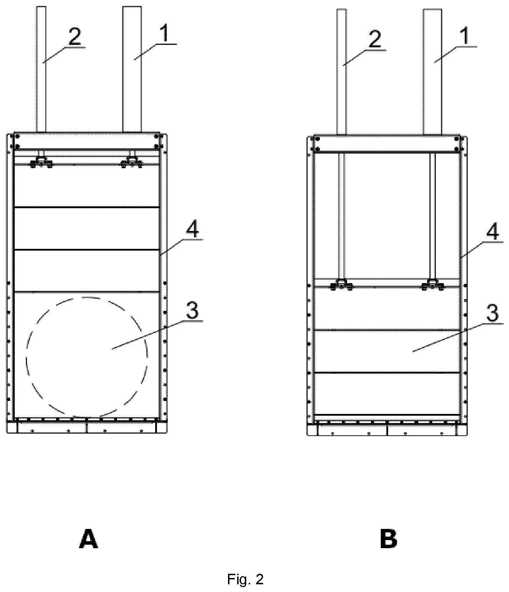

In the first example, illustrated in Figs. 1 and 2, the channel valve is equipped with a linear pneumatic actuator (1) that moves the gate (3) between the open and closed positions. The return mechanism includes a gas spring (2) mounted parallel to the actuator (1). The gas spring (2) serves as a mechanical energy accumulator. During the actuator's movement to the active position (open or closed), the gas spring (2) accumulates energy by compressing the gas inside. In the event of a power failure in the actuator (1), the gas spring (2) automatically moves the gate (3) back to the neutral (normal) position. This variant is particularly advantageous for use in stormwater drainage systems, where frequent opening and closing of the flow is required depending on rainfall intensity.

### Example 2: Channel valve with Pneumatic Actuator and Counterweight

In this example, a pneumatic actuator (1) is used along with a return mechanism in the form of a counterweight (2). The gate (3) is moved by the actuator (1), which raises the gate (3) to the active position (e.g., open). The counterweight (2), mounted on an arm on the opposite side of the gate (3), accumulates gravitational energy during the gate's upward movement. In the event of actuator (1) failure, the counterweight (2) automatically lowers the gate (3) to the neutral (normal) position. This variant is best suited for large channels where the valve is of substantial size and the return mechanism must counter a significant gate mass.

### Example 3: Channel valve with Hydraulic Actuator and Mechanical Spring

In this configuration, the channel valve has a hydraulic actuator (1) controlling the gate's (3) movement. The return mechanism consists of a mechanical spring (2) mounted on the hinges of the valve frame (4). When the hydraulic actuator (1) moves the gate (3) to the active position, the mechanical spring (2) is tensioned. In the event of hydraulic actuator (1) failure, the mechanical spring (2) automatically returns to its original position, either closing or opening the valve, depending on the configuration. This variant is suitable for smaller sewer installations where simplicity and reliability are priorities, and the hydraulic actuator (1) provides significant operational force.

### Example 4: Channel valve with Dual Gas Springs

In this version of the mechanism, the channel valve is equipped with a pneumatic actuator (1) and two gas springs (2) mounted on either side of the gate (3). As the actuator (1) moves the gate (3), both gas springs (2) accumulate energy. In the event of failure or power loss to the actuator (1), the two springs (2) work together to quickly and effectively return the gate (3) to the neutral position, ensuring better balance and greater return force.

## Claims

1. A passive return mechanism for a gate (3) of a channel valve (Z) equipped with an actuator (1) powered by an external energy source, wherein the actuator (1) maintains the gate (3) of the channel valve in a specified working position: open / closed, **characterized in that** the passive return mechanism comprises a mechanical energy accumulator (2) configured so that in the event of a power failure in the actuator (1) maintaining the gate (3) of the channel valve in the specified open / closed position, the mechanical energy accumulator (2) activates the actuator (1), which moves the gate (3) of the channel valve back to the appropriate position opposite to the working position, i.e. closed from open and open from closed.

2. The passive return mechanism for the gate (3) of a channel valve (Z) according to claim 1, wherein the actuator (1) is a cylinder or gearbox.

3. The passive return mechanism for the gate (3) of a channel valve according to claim 2, wherein the actuator is a linear pneumatic actuator.

4. The passive return mechanism for the gate (3) of a channel valve according to claim 1, wherein the mechanical energy accumulator (2) is a spring or counterweight.

5. The passive return mechanism for the gate (3) of a channel valve according to claim 4, wherein the spring is a gas spring.

6. A channel valve comprising a gate (3) as a blocking element, an actuator (2) connected to an external energy source maintaining the gate (3) of the channel valve in a specified working position: open/closed, and a frame (4), wherein the channel valve is equipped with the passive return mechanism for the gate (3) as defined in any of claims 1 to 5.

7. A channel (5) equipped with a channel valve as defined in any of claims 1 to 6.

8. The use of a channel valve as defined in any of claims 1 to 6 in sanitary, stormwater, and combined sewer systems.
